# EUROPEAN PATENT APPLICATION

(11) **EP 1 775 048 A1**
(43) Date of publication of application: **18.04.2007**
(21) Application number: 05766229.8
(22) Date of filing: 11.07.2005
(51) Int. Cl.: B23F 11/00, B62D 5/04, F16H 1/16, F16H 55/06, F16H 55/22

(54) **METHOD OF MACHINING WORM WHEEL, WORM WHEEL, WORM REDUCTION GEAR, AND ELECTRIC POWER STEERING DEVICE**

(30) Priority: 09.07.2004 JP 2004203562
(71) Applicant: NSK LTD., Shinagawa-ku, Tokyo 141-8560 (JP)
(72) Inventor: IWANO, Toshiyuki, NSK STEERING SYSTEMS CO., LTD, Maebashi-shi, Gunma 3718 528 (JP)
(74) Representative: Cross, James Peter Archibald
(86) International application number: PCT/JP2005/013194
(87) International publication number: WO 2006/006705

(57) **Abstract**

In a method of machining gear teeth 2 of worm wheel 1 by causing a worm (not shown) on which abrasive or grinding material is added to mesh with the gear teeth 2 of the worm wheel 1, at least the gear teeth of said worm wheel being made of a synthetic resin, and rotating the worm, the machining is performed in such a state that the angle formed by the axis of the worm wheel and the virtual helical axis in forming the gear teeth of the worm wheel is made substantially equal to the angle formed by the axis of said worm wheel and the helical axis of said worm.

## Description

### TECHNICAL FIELD

The present invention relates to a worm wheel machining method with which meshing of a worm and a worm wheel is improved, a worm wheel, a worm speed reducer and an electric power steering apparatus.

### BACKGROUND ART

The worm speed reducer provided in an electric power steering apparatus (EPS) is adapted to drive a worm using an electric motor and transmit the driving force to a worm wheel meshing with the worm while reducing the speed to give an steering assist force to the steering shaft. The worm is made of a metal, and at least the gear teeth of the worm wheel is made of a synthetic resin.

The gear teeth of the worm wheel are conventionally machined using a hob cutter. The number of threads of the hob cutter is equal to or less than that of the worm used, and the lead angle thereof is equal to or smaller than 10 degrees.

This is because the hob cutter has a plurality of teeth, and the lead angle is restricted so that interference with another tooth is prevented when producing each tooth. A typical lead angle is approximately 3 degrees.

When hob cutters are used as machining tools, hob cutters having large lead angles are not manufactured irrespective of machining diameters in view of use in mass production. That is because the hob cutter is required to have a long usable life in view of use in mass production, and the hob cutter is reground during its usable life. The hob cutter that can machine the same tooth flank even after reground cannot have a large lead angle, namely, the lead angle is smaller than ten degrees, and typically its lead angle is about 3 degrees.

Given the above described situation, cutting of the gear teeth of a worm wheel is performed in such a state that the axis of the worm wheel and the axis of the hob cutter are arranged at a certain crossing angle so that the lead angle of the hob cutter becomes equal to the lead angle of the worm wheel.

However, the worm speed reducer for EPS is required to have a certain reverse efficiency when the worm wheel acts as the driving part in order to ensure returning of the steering wheel. Accordingly, a relatively large lead angle is set, that is, for example, about 20 degrees.

The smaller the diameter of the tool for machining the worm wheel is, the closer the lead angles at the tooth root and the tooth top of the worm wheel become to the lead angles at the tooth root and the tooth top of the worm, and the larger the tooth contact width becomes. Thus, the abrasion resistance of the gear teeth is improved. However, there is a problem that interference of the teeth of the worm and the teeth of the worm wheel that precede or succeed the meshing teeth occurs due to disagreement of their helical axes.

The gear teeth 2 of the worm wheel 1 and the virtual helical axis (X) thereof are in the relationship shown in Fig. 2, while the gear teeth 2 of the worm wheel 1 and the helical axis (Y) of the worm (not shown) are in the relationship shown in Fig. 3. Consequently, disagreement between the helical axes (X and Y) of them brings about interference of the gear teeth of the worm (not shown) and the gear teeth of the worm wheel 1 that precede or succeed the meshing teeth as indicated by reference numeral "3" in Fig. 4. In the machining performed using a conventional hob cutter, the axis of the hob cutter corresponds to the virtual helical axis (X). The helical axis (Y) of the worm (not shown) refers to the helical axis of the worm coupled.

To reduce the machining diameter of the worm wheel is to reduce the diameter of the hob cutter. The helix interference occurs due to a difference in the angles of the virtual helical axis of the worm wheel and the helical axis of the worm actually coupled therewith. In other words, when machining is performed with a reduced machining tool diameter and with a certain crossing angle in order to widen the tooth contact width, helix interference will occur.

### DISCLOSURE OF THE INVENTION

The present invention has been made in view of the above described situations and has as an object to provide a worm wheel machining method, a worm wheel, a worm speed reducer and an electric power steering apparatus in which helix interference caused by reduction of the diameter of the worm wheel machining tool can be eliminated.

To achieve the above object, a worm wheel machining method according to the present invention for machining gear teeth of a worm wheel by causing a worm on which abrasive or grinding material is added to mesh with the gear teeth of said worm wheel, at least the gear teeth of said worm wheel being made of a synthetic resin, and rotating the worm, is characterized in that machining is performed in such a state that the angle formed by the axis of said worm wheel and the virtual helical axis in forming the gear teeth of said worm wheel is made substantially equal to the angle formed by the axis of said worm wheel and the helical axis of said worm.

Here, the virtual helical axis in forming the gear teeth of the worm wheel refers to the helical axis of the worm used as a machining tool for forming the gear teeth of the worm wheel while the worm is meshing with the worm wheel and machining the gear teeth. The machining tool is not limited to a worm. For example, molding means using a mold may also be used.

In the worm wheel machining method according to the present invention, it is preferred that the meshing pitch circle diameter of the virtual helix in forming the gear teeth of said worm wheel be equal to or larger than the pitch circle diameter of the worm to be coupled therewith.

A worm wheel according to the present invention is characterized in that at least gear teeth of said worm wheel is made of a synthetic resin, and the gear teeth is produced by machining that is performed in such a state that the angle formed by the axis of said worm wheel and the virtual helical axis in forming the gear teeth of said worm wheel becomes substantially equal to the angle formed by the axis of said worm wheel and the helical axis of said worm.

In the worm wheel according to the present invention, it is preferred that the meshing pitch circle diameter of the virtual helix in forming the gear teeth of said worm wheel be equal to or larger than the pitch circle diameter of the worm to be coupled therewith.

In the worm wheel according to the present invention, it is preferred that the gear teeth of said worm wheel be machined by causing a worm serving as a machining tool on which abrasive or grinding material is added to mesh with the gear teeth of said worm wheel and rotating the worm.

In the worm wheel according to the present invention, it is preferred that the meshing pitch circle diameter of the virtual helix in forming the gear teeth of said worm wheel make the lead angle of a worm serving as a machining tool and the lead angle of a worm coupled to the finished worm wheel equal to each other, whereby the helical axis of said worm coupled and the axis of said worm wheel be arranged at a crossing angle other than 90 degrees.

In the worm wheel according to the present invention, it is preferred that the lead angle of said worm coupled be 16 to 24 degrees.

A worm speed reducer according to the present invention is characterized by that it is provided with a worm wheel according to the above described worm wheel according to the present invention.

An electric power steering apparatus according to the present invention is characterized in that it is provided with the worm speed reducer according to the present invention.

According to the present invention, since machining is performed in such a state that the virtual helical axis in forming the gear teeth of the worm wheel substantially agree with the helical axis of the worm, it is possible to eliminate helix interference that can occur when the machining diameter of a worm wheel machining tool is made small. In addition, since the diameter of the worm wheel machining tool may be made small, the teeth contact width is widened, whereby it is possible to improve abrasion resistance of the gear teeth.

In addition, in the case where the meshing pitch circle diameter of the virtual helix in forming the gear teeth of the worm wheel is larger than the pitch circle diameter of the worm coupled to the worm wheel, the helical axis of the worm and the axis of the worm wheel coupled therewith may be arranged at a crossing angle different from 90 degrees. This means that when a worm as a tool having a pitch circle diameter (PCD) larger than that of the worm to be coupled is used, if machining of the gear teeth is performed with the virtual helical axis that constitutes the machining axis being arranged to maintain a certain crossing angle with the axis of the worm wheel, the distance of the axis of the worm used from the axis of the worm wheel in the actual use may be made smaller than the distance of the worm serving as the machining tool during machining from the axis of the worm wheel.

In addition, since the lead angle of the worm coupled is 16 to 24 degrees, it is compatible with returning of the steering wheel for EPS.

In the conventional arts, a reduction of the diameter of the processing tool leads to a decrease in the number of teeth per rotation. The tooth flank of the worm wheel is formed by one rotation of the hob cutter, and when the number of teeth per one rotation of the hob cutter is small, the tooth flank becomes unduly polygonal to deteriorate tooth contact. In contrast, according to the present invention, for example, a worm with a filing tooth surface such as an electrolytic-deposited worm is used. Therefore, it is possible to perform continuous machining of a tooth surface, and provide good tooth contact. Accordingly, although it has a large lead angle as a machining tool, it can produce gear teeth of a worm wheel that can nearly achieve area contact without suffering from helix interference and that is hardly worn.

In the conventional arts, in the case where a worm wheel is machined in a state in which the axes of the machining tool and the worm wheel are arranged to form a certain crossing angle, the tooth contact of the worm wheel and the finished worm coupled therewith is point contact, theoretically. However, in the case where machining is performed in such a state the angle formed by the axis of the worm wheel and the virtual helical axis in forming the gear teeth of the worm wheel is made substantially equal to the angle formed by the axis of said worm wheel and the helical axis of said worm, line contact is achieved theoretically. Thus, meshing of the finished worm wheel and the worm nearly achieves area contact, whereby abrasion resistance is improved.

### BRIEF DESCRIPTION OF THE DRAWINGS

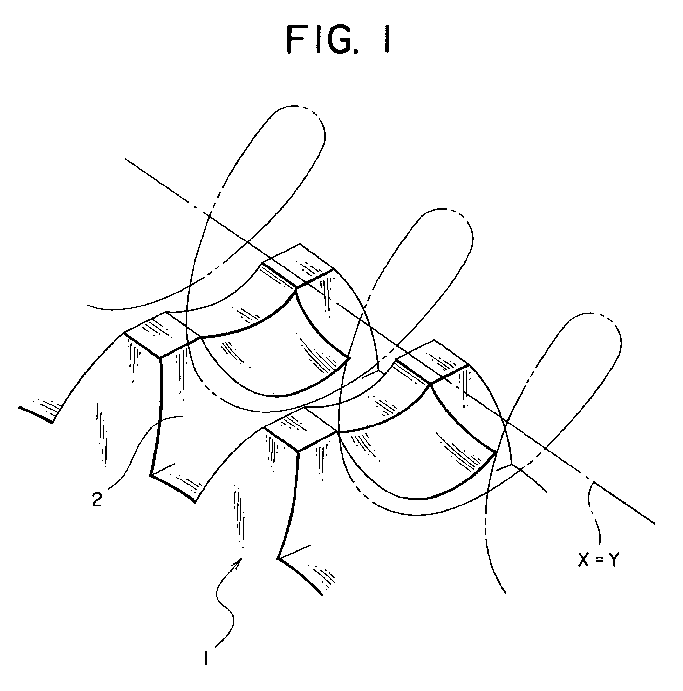

Fig. 1 is a partial perspective view of a worm wheel, showing the relationship between a virtual helical axis in forming gear teeth of the worm wheel and the helical axis of a worm.

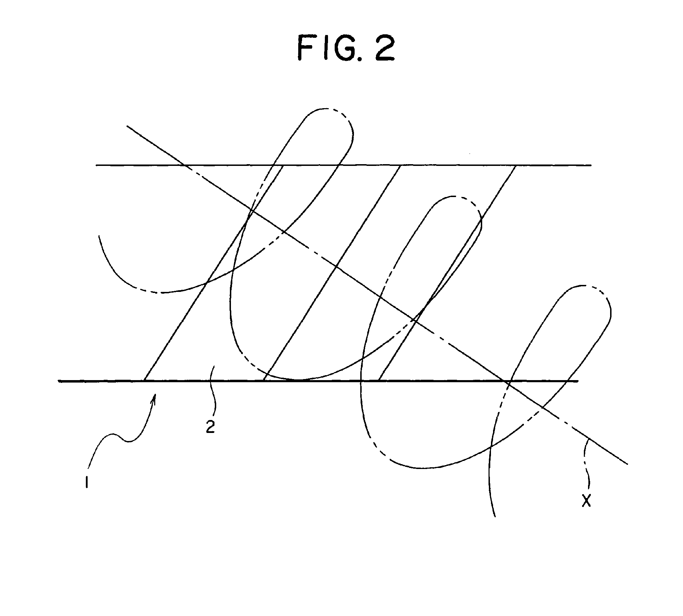

Fig. 2 schematically shows the relationship between the gear teeth of a worm wheel and the virtual helical axis of the gear teeth.

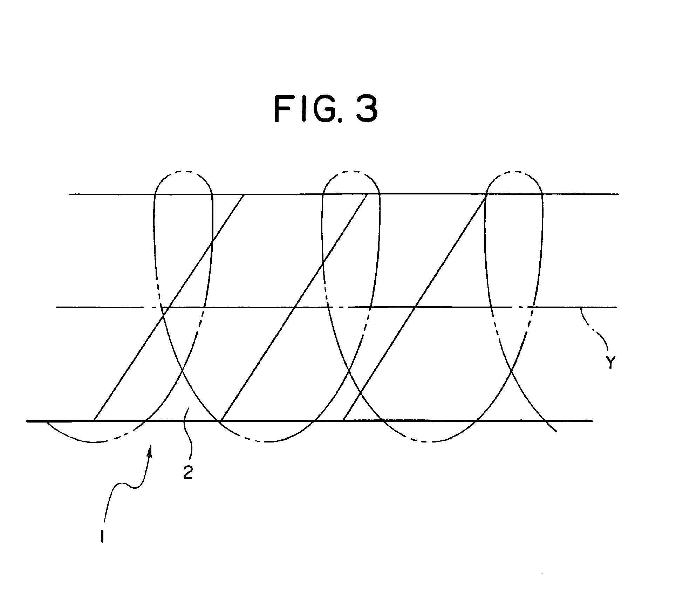

Fig. 3 schematically shows the relationship between the gear teeth of a worm wheel and the helical axis of a worm.

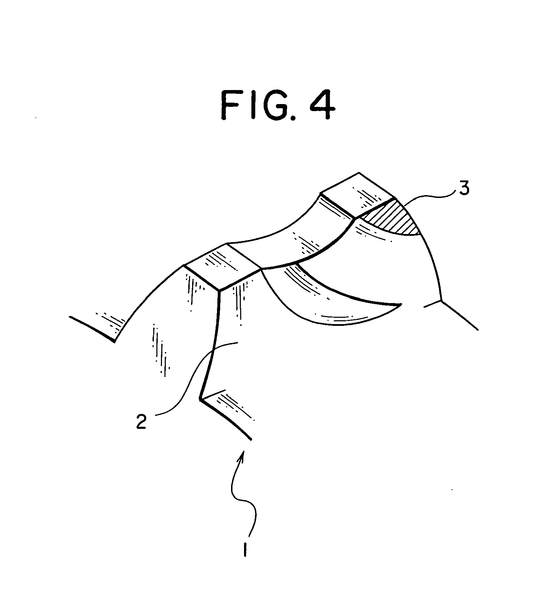

Fig. 4 is a partial perspective view of the worm wheel, showing a state in which helix interference occurs in a gear tooth of the worm wheel.

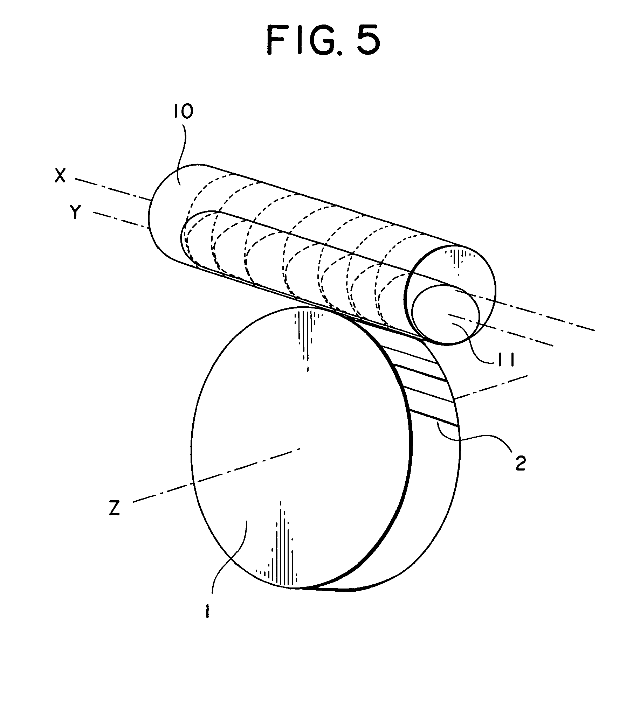

Fig. 5 schematically illustrates a worm wheel machining method according to an embodiment of the present invention.

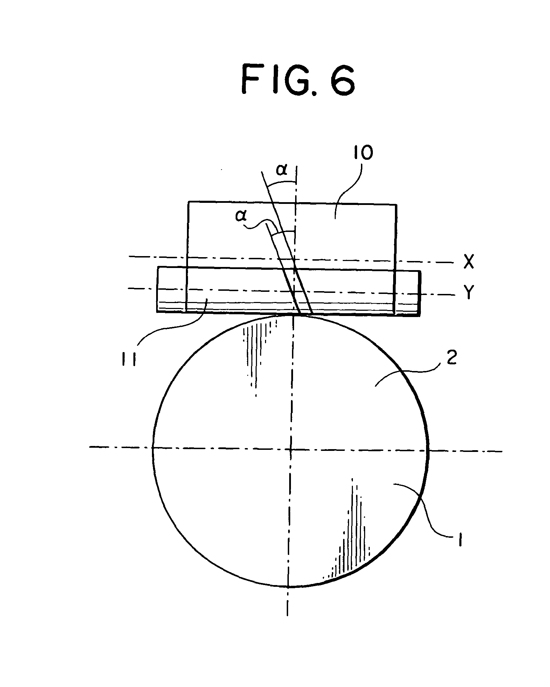

Fig. 6 schematically illustrates the worm wheel machining method according to the embodiment shown in Fig. 5 from a different angle.

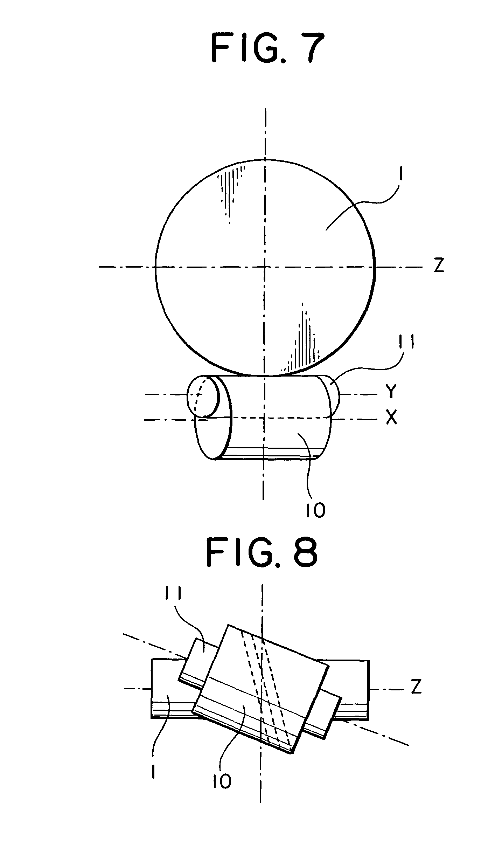

Fig. 7 schematically illustrates a worm wheel machining method according to another embodiment of the present invention.
Fig. 8 schematically illustrates the worm wheel machining method according to the embodiment shown in Fig. 7 as seen from below.

### THE BEST MODE FOR CARRYING OUT THE INVENTION

In the following a worm wheel machining method, a worm wheel, a worm speed reducer and an electric power steering apparatus according to an embodiment of the present invention will be described with reference to drawings.

Fig. 1 is a partial perspective view of a worm wheel, showing the relationship between the virtual helical axis in forming the gear teeth of the worm wheel and the helical axis of a worm. In this embodiment, when gear teeth 2 of a worm wheel 1 is machined by causing a worm 10 on which abrasive or grinding material is added serving as a machining tool to mesh with gear teeth 2 of the worm wheel 1 that is made of a synthetic resin at least in its gear teeth and rotating the worm 10, the angle formed between the axis Z of the worm wheel 1 and the virtual helical axis X in forming the gear teeth 2 of the worm wheel 1 is arranged to be substantially equal to the angle formed between the axis Z of said worm wheel and the helical axis Y of said worm, as shown in Figs. 5 and 6.

Specifically, diamond abrasive particles with a roughness of 600 grit are attached on the worm 10 (Figs. 5 to 8) serving as a machining tool by electro-deposition. More specifically, the worm is electrolytic-plated in a nickel plating bath in which diamond abrasive particles are agitated, whereby a coating containing diamond abrasive particles is formed thereon. The worm thus obtained is caused, as a machining tool, to mesh with the gear teeth 2 of the worm wheel 1 made of a fiber-reinforced synthetic resin and rotated, whereby the meshing flank of the gear teeth 2 of the worm wheel 1 are ground. Since the machining is performed in the angle relationship same as that of the worm 11 to be used and the processed worm wheel 1, helix interference will not occur.

In this embodiment, while the worm 11 to mesh with the finished worm wheel has two threads, the worm 10 used as the machining tool has three threads. As long as the lead angle of the worm 11 to mesh and the lead angle of the worm 10 used as the machining tool are equal to each other, the worm meshes the worm wheel irrespective of the number of the threads.

Alternatively, a knurl pattern like that of a file is formed on the tooth flank of the worm 10 used as the machining tool, and the worm 10 is caused to mesh with the gear teeth 2 of the worm wheel 1 made of a fiber-reinforced synthetic resin and rotated, whereby the meshing flanks of the gear teeth 2 of the worm wheel 1 are ground. In this case also, since the machining is performed in the angle condition same as that of the worm 11 to be used, helix interference will not occur.

Furthermore, as long as the virtual helical axis (X) of the worm 10 serving as the machining tool for the gear teeth 2 of the worm wheel 1 and the helical axis (Y) of the worm 11 to be used are in the same angular relationship to the axis (Y) of the worm wheel 1, it is not necessary that the worm 10 serving as the machining tool and the worm wheel 1 to be machined are arranged to cross at an angle of 90 degrees, but they may be cross each other at an arbitrary or appropriate angle.

Machining may also be performed using a form grinder having the same shape as the worm 11 to mesh.

Furthermore, to prevent partial contact of the tooth flank caused by assembly errors etc., teeth of the worm wheel may be crowned using the worm serving as the machining tool.

The crowning may be performed in the following way:
(1) machining the worm wheel using a machining tool whose lead angle is the same as that of the gear teeth of the worm wheel and whose reference pitch circle diameter is larger than that of the worm to be coupled;
(2) machining it after displacing the machining axis in +/- directions along the width direction of the worm teeth by a small amount;
(3) machining it after inclining the machining axis in +/- directions about the center of meshing by a small angle; and
(4) setting a pressure angle of the worm wheel slightly smaller than that of the worm.

As per the above, according to this embodiment, machining is performed with the angle formed by the axis of the worm wheel 1 and the virtual helical axis (X) of the worm 10 used as the machining tool in forming the gear teeth 2 of the worm wheel 1 being made substantially equal to the angle formed by the helical axis (Y) of the worm 11 to mesh and the axis of the worm wheel 1, whereby it is possible to prevent helix interference that can occur when a worm wheel 1 machining tool with a reduced diameter is used. In addition, since the diameter of the worm wheel 1 machining tool may be made small, the teeth contact width is widened, whereby it is possible to improve abrasion resistance of the gear teeth 2.

In addition, the meshing pitch circle diameter of the virtual helix of the worm 10 as the machining tool used in forming the gear teeth 2 of the worm wheel makes the lead angle of the worm serving as the machining tool and the lead angle of the worm 11 to be coupled equal to each other, whereby the helical axis (Y) of the worm 11 and the axis (Z) of the worm wheel 1 coupled therewith may be arranged at a crossing angle different from 90 degrees. This means that machining may be performed using a worm 10 as a tool having a pitch circle diameter (PCD) larger than that of the worm 11 to be coupled, with the machining axis (or the virtual helical axis) (X) of the worm 10 as the machining tool being arranged to form a certain crossing angle from the axis (Z) of the worm wheel 1, and the distance of the axis of the worm from that of the worm wheel 1 in the actual use may be made smaller than that during machining.

In addition, since the lead angle of the worm 10 coupled is 16 to 24 degrees, it is compatible with returning of the steering wheel for EPS.

In the conventional arts, a reduction of the diameter of the processing tool leads to a decrease in the number of teeth per one rotation of the hob cutter. The tooth flank of the worm wheel 1 is formed by one rotation of the hob cutter, and when the number of teeth per one rotation of the hob cutter is small, the tooth flank becomes unduly polygonal to deteriorate tooth contact. In contrast, according to this embodiment, for example, a worm 10 with a filing tooth surface such as an electrolytic-deposited worm can perform continuous machining of a tooth surface, and provide good tooth contact. Accordingly, although it has a large lead angle as a machining tool, it can produce gear teeth 2 of a worm wheel 1 that can nearly achieve area contact without suffering from helix interference and that is hardly worn.

In the conventional arts, if a worm wheel 1 is machined in a state in which the axes of the machining tool and the worm wheel 1 are arranged to cross each other at a certain crossing angle, the tooth contact of the worm wheel 1 and the finished worm 11 coupled therewith is point contact, theoretically. However, in the case where the angle formed by the axis of the worm wheel 1 and the virtual helical axis (X) of the worm 10 used as the machining tool in forming gear teeth 2 of the worm wheel 1 and the angle formed by the helical axis (Y) of the worm 11 and the axis of the worm wheel 1 to mesh therewith are substantially equal to each other, line contact is achieved theoretically. Thus, meshing of the finished worm wheel and the worm nearly achieve area contact, whereby abrasion resistance is improved.

The present invention is not limited to the above described embodiments but can be modified in various ways.

## Claims

1. A worm wheel machining method for machining gear teeth of a worm wheel by causing a worm on which abrasive or grinding material is added to mesh with the gear teeth of said worm wheel, at least the gear teeth of said worm wheel being made of a synthetic resin, and rotating the worm, **characterized in that** machining is performed in such a state that the angle formed by the axis of said worm wheel and the virtual helical axis in forming the gear teeth of said worm wheel is made substantially equal to the angle formed by the axis of said worm wheel and the helical axis of said worm.

2. A worm wheel machining method according to claim 1, **characterized in that** the meshing pitch circle diameter of the virtual helix in forming the gear teeth of said worm wheel is equal to or larger than the pitch circle diameter of the worm to be coupled therewith.

3. A worm wheel **characterized in that** at least gear teeth of said worm wheel is made of a synthetic resin, and the gear teeth is produced by machining that is performed in such a state that the angle formed by the axis of said worm wheel and the virtual helical axis in forming the gear teeth of said worm wheel becomes substantially equal to the angle formed by the axis of said worm wheel and the helical axis of said worm.

4. A worm wheel according to claim 3, **characterized in that** the meshing pitch circle diameter of the virtual helix in forming the gear teeth of said worm wheel is equal to or larger than the pitch circle diameter of the worm to be coupled therewith.

5. A worm wheel according to claim 3 or 4, **characterized in that** the gear teeth of said worm wheel is machined by causing a worm on which abrasive or grinding material is added to mesh with the gear teeth of said worm wheel and rotating the worm.

6. A worm wheel according to claim 3 or 4, **characterized in that** the meshing pitch circle diameter of the virtual helix in forming the gear teeth of said worm wheel makes the lead angle of a worm serving as a machining tool and the lead angle of a worm coupled equal to each other, and the helical axis of said worm and the axis of said worm wheel coupled therewith are arranged at a crossing angle other than 90 degrees.

7. A worm wheel according to claim 3 or 4, **characterized in that** the lead angle of said worm coupled is 16 to 24 degrees.

8. A worm speed reducer **characterized by** a worm wheel according to claim 3 or 4.

9. An electric power steering apparatus **characterized by** a worm speed reducer according to claim 8.
